(19) Europäisches Patentamt
European Patent Office
Office européen des brevets

(11) **EP 2 645 779 A1**

(12) **EUROPEAN PATENT APPLICATION**
published in accordance with Art. 153(4) EPC

(43) Date of publication:
**02.10.2013 Bulletin 2013/40**

(51) Int Cl.:
**H04W 48/08** (2009.01)  **H04W 74/08** (2009.01)

(21) Application number: **11854388.3**

(22) Date of filing: **28.12.2011**

(86) International application number:
**PCT/CN2011/084788**

(87) International publication number:
**WO 2012/089118 (05.07.2012 Gazette 2012/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2010 CN 201010623123**

(71) Applicant: **Huawei Technologies Co., Ltd.
Shenzhen, Guangdong 518129 (CN)**

(72) Inventor: **SHU, Bing
Shenzhen
Guangdong 518129 (CN)**

(74) Representative: **Epping - Hermann - Fischer
Patentanwaltsgesellschaft mbH
Ridlerstrasse 55
80339 München (DE)**

(54) **NETWORK ACCESS METHOD AND DEVICE**

(57) Embodiments of the present invention provide a network access method and device. The method includes: receiving, by a terminal, access control information sent by a network-side device, where the access control information includes information of an available frame allocated to the terminal according to a class identifier of the terminal on a random access channel RACH; and accessing, by the terminal, a network through the allocated available frame according to the access control information. By using the solutions provided by the embodiments of the present invention, various terminals may be controlled to access the network according to the actual load condition of network.

A terminal receives access control information sent by a network-side device, where the access control information includes information of available frames allocated to the terminal according to a class identifier of the terminal in an RACH — 101

The terminal accesses a network through the allocated available frames according to the access control information — 102

FIG. 1

EP 2 645 779 A1

## Description

This application claims priority to Chinese Patent Application No. 201010623123.2, filed with the Chinese Patent Office on December 28, 2010 and entitled "NETWORK ACCESS METHOD AND DEVICE", which is incorporated herein by reference in its entirety.

## TECHNICAL FIELD

Embodiments of the present invention relate to communications technologies, and in particular, to a network access method and device.

## BACKGROUND

In a global system for mobile communications (Global System for Mobile Communications, GSM), if a terminal needs to establish communication with a network, the terminal needs to send a message to the network through an uplink random access channel (Random Access Channel, RACH) of a common control channel (Common Control Channel, CCCH) to request a signaling channel from the system, and a network-side device will determine the type of a channel to be allocated as required by the channel request. The message sent on the RACH is referred to as a channel request (Channel Request or EGPRS Packet Chanel Request, CR). After receiving the CR from the terminal, the network-side device sends an immediate allocation message through a downlink immediate allocation channel (Access Grant Channel, AGCH) of the CCCH. If the terminal receives the immediate allocation message, the access initiated by the terminal is successful, and the terminal establishes a connection with the network-side device in a subsequent procedure and transmits signaling or data. If the terminal does not receive an allocation acknowledgment (for example, immediate allocation, allocation reject, and so on) from the network-side device after sending the CR, the terminal resends the CR through the RACH, and the terminal can send the CR for up to M+1 times through the RACH, where M represents the maximum number of retransmissions. If the terminal still fails to access the network after retransmitting the CR for M times, cell reselection is required.

With the development of network technologies, in addition to Human to Human (Human to Human, H2H) type terminals, a large number of machine to machine (Machine to Machine, M2M) type terminals also exist. Due to the large number of M2M terminals, some new problems arise. For example, once a regional power failure or an earthquake or other failures occur, these M2M devices need to report such events to a machine type communication (Machine Type Communication, MTC) server, and meanwhile will activate a connection with the network side. In this case, the network may suddenly encounter connections requested by a large number of M2M devices, and congestion is unavoidable if RACH resources are not enough. Inevitably, two or more terminals (including user terminals and device terminals) contend for a same RACH timeslot simultaneously to request access, and this is known as a collision phenomenon. The level of a burst pulse received in this timeslot by the network side is obviously higher than that of another one. Therefore, the network processes a CR that has a higher level. However, because of mutual interference therebetween, the network cannot correctly receive either one. Consequently, with the increase of traffic, the probability of messages lost due to collisions is increasingly higher, inevitably resulting in lower network reliability.

## SUMMARY

Embodiments of the present invention provide a network access method and device, for controlling various terminals to access a network according to access control information at a network side.

In one aspect, an embodiment of the present invention provides a network access method, including:

receiving, by a terminal, access control information sent by a network-side device, where the access control information includes information of an available frame allocated to the terminal according to a class identifier of the terminal on a random access channel RACH; and

accessing, by the terminal, a network through the allocated available frame according to the access control information.

In another aspect, an embodiment of the present invention also provides a network access method, including:

constructing, by a network-side device, a message including access control information, where the access control information includes information of an available frame allocated to a terminal according to a class identifier of the terminal on a random access channel RACH; and

sending the message including the access control information to the terminal, so that the terminal accesses a network through the allocated available frame according to the access control information.

In still another aspect, an embodiment of the present invention also provides a terminal, including:

a transceiver module, configured to receive access control information sent by a network-side device, where the access control information includes information of an available frame allocated to the terminal according to a class identifier of the terminal on a random access channel RACH; and
an access module, configured to access a network through the allocated available frame according to the access control information received by the transceiver module.

In still another aspect, an embodiment of the present invention also provides a network-side device, including:

a constructing module, configured to construct a message including access control information, where the access control information includes information of an available frame allocated to a terminal according to a class identifier of the terminal on a random access channel RACH; and
a sending module, configured to send the message including the access control information to the terminal, so that the terminal accesses a network through the allocated available frame according to the access control information.

By using the network access method and device provided by the embodiments of the present invention, a network-side device sends access control information to a terminal, where the access control information includes information of available frames allocated to the terminal according to a class identifier of the terminal on an RACH; and the terminal accesses a network through the allocated available frames according to the access control information. In this way, various terminals with different class identifiers are effectively controlled to use available frames corresponding to their class identifiers when accessing the network and the network access performed by the terminals is well controlled.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from the accompanying drawings without creative efforts.

FIG. 1 is a flowchart of a network access method according to an embodiment of the present invention;
FIG. 2 is a flowchart of a network access method according to another embodiment of the present invention;
FIG. 3 is a schematic diagram showing allocation of available frames of RACH resources according to another embodiment of the present invention;
FIG. 4 is a flowchart of a network access method according to still another embodiment of the present invention;
FIG. 5 is a flowchart of a network access method according to still another embodiment of the present invention;
FIG. 6 is a flowchart of a network access method according to still another embodiment of the present invention;
FIG. 7 is a flowchart of a network access method according to still another embodiment of the present invention;
FIG. 8 is a schematic diagram showing a retransmission interval and granted RACH resources with an intersection according to still another embodiment of the present invention;
FIG. 9 is a schematic diagram showing a retransmission interval and granted RACH resources without an intersection according to still another embodiment of the present invention;
FIG. 10 is a flowchart of a network access method according to still another embodiment of the present invention;
FIG. 11 is a flowchart of a network access method according to still another embodiment of the present invention;
FIG. 12 is a schematic structural diagram of a terminal according to an embodiment of the present invention; and
FIG. 13 is a schematic structural diagram of a network-side device according to an embodiment of the present invention.

## DESCRIPTION OF EMBODIMENTS

To make the objectives, technical solutions, and advantages of the present invention more comprehensible, the following clearly and completely describes the technical solutions  in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without making any creative effort are covered in the protection scope of the present invention.

In the embodiments of the present invention, terminals may be divided into different classes. The terminals have their respective class identifiers, which may be access classes in the prior art or other parameters, such as extended access classes (Extended Access Classes, EAC) used for M2M terminals, or may be priorities of the terminals, and so on. The following uses the access classes of terminals as an example for description. Generally, an access class is allocated to each of GSM users (that is, common users). The access classes may be divided into classes 0 to 9. The access classes are stored in subscriber identity module (Subscriber Identity Module, SIM) cards of the terminals. Five special access classes, namely, class 11 to class 15, are reserved for some special users. These classes usually have higher access priorities. Special users may have one or more access classes (classes 11 to 15), which are also stored in the SIM cards of the users. For example, access classes allocated by an operator are as follows:

classes 0 to 9, for common users;
class 11, for management of a public land mobile-communication network (Public Land Mobile-communication Network, PLMN) and so on;
class 12, for security sectors;
class 13, for public utility (such as water and gas) sectors;
class 14, for emergency services; and
class 15, for PLMN staff.

The access rights of users of access classes 0 to 9 are applicable to both a home PLMN and a visited PLMN. The access rights of users of access classes 11 to 15 are only applicable to a home PLMN. The access rights of users of access classes 12 to 14 are applicable to a country or region to which a home PLMN belongs. Users of access classes 11 to 15 have higher access priorities than users of access classes 0 to 9, but values of the access classes 0 to 9 and 11 to 15 do not represent the access priorities.

An RACH is an uplink resource of a CCCH, and the quantity of resources thereof depends on the number of basic physical channels of the CCCH and the channel mapping of the CCCH. An RACH is composed of some continuous or discontinuous time division multiple access (Time Division Multiple Access, TDMA) frames. These TDMA frames have respective sequence numbers, which are referred to as frame numbers (Frame Number, FN) and are within the range of 0-2715647. Different terminals have their respective available RACH resources (that is, available frames) corresponding to their class identifiers. The RACH resources can be independent or overlap with each other.

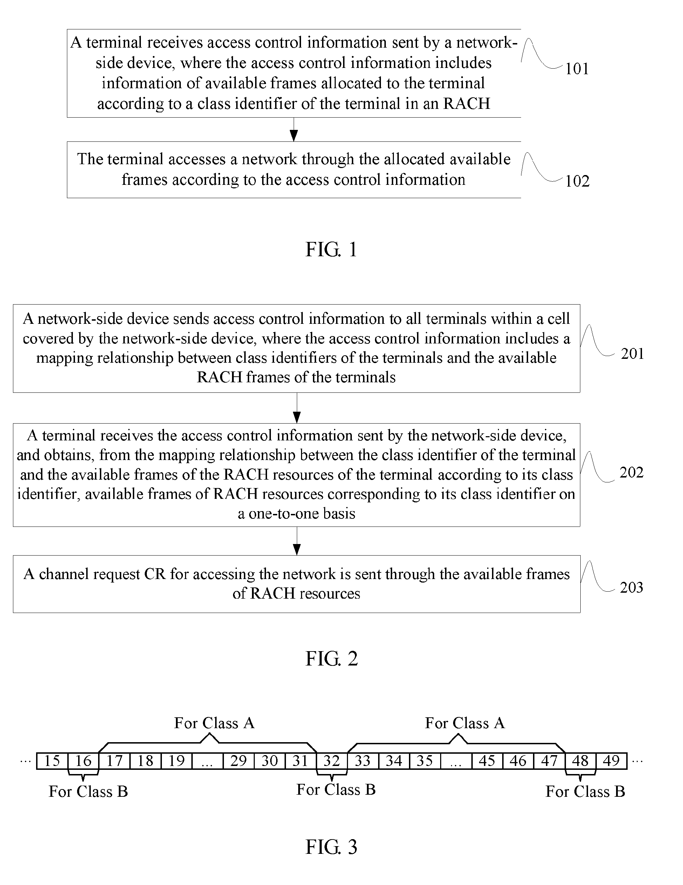

FIG. 1 is a flowchart of a network access method according to an embodiment of the present invention. As shown in FIG. 1, the method includes:

Step 101: A terminal receives access control information sent by a network-side device, where the access control information includes information of available frames allocated to the terminal according to a class identifier of the terminal on an RACH.

The access control information is information sent to the terminal by the network-side device according to real-time conditions such as the network load and the number of roaming terminals.

The access control information may include but is not limited to: a mapping relationship between the class identifier of the terminal and delay time of the terminal, a mapping relationship between the class identifier of the terminal and a delay interval of first access of the terminal, a mapping relationship between the class identifier of the terminal and a retransmission interval of the terminal, a mapping relationship between the class identifier of the terminal and the maximum number of retransmissions of the terminal, a mapping relationship between the class identifier of the terminal and cell reselection information of the terminal, and so on.

The network-side device may send the above control information to all terminals through an air interface message. The air interface message may be system information (System Information, SI), a paging message (Paging Message, Paging), or cell broadcast (Cell Broadcast, CB).

Step 102: The terminal accesses a network through the allocated available frames according to the access control information.

By using the network access method provided by the embodiment of the present invention, a network-side device sends access control information to a terminal, where the access control information includes information of available frames allocated to the terminal according to a class identifier of the terminal in an RACH; and the terminal accesses a network through the allocated available frames according to the access control information. In this way, various terminals with different class identifiers are effectively controlled to use available frames corresponding to their class identifiers when accessing the network and the network access performed by the terminals is well controlled. For example, the network-side device may not allocate available RACH frames or may allocate few available RACH frames to the terminals with a class identifier M2M. In this way, the M2M terminals cannot access the network or can access the network through only few available RACH frames, so that the terminals which access the network through other available RACH frames in the existing network are not affected.

FIG. 2 is a flowchart of a network access method according to another embodiment of the present invention. In this embodiment, the description is based on an example in which access control information includes a mapping relationship between a class identifier of a terminal and available RACH frames of the terminal. As shown in FIG. 2, the method includes:

Step 201: A network-side device sends access control information to all terminals within a cell covered by the network-side device, where the access control information includes a mapping relationship between class identifiers of the terminals and the available RACH frames of the terminals.

In this embodiment, the network-side device may allocate available RACH frames to each of terminals according to the class identifiers of the terminals.

The following describes how the network-side device allocates available RACH frames with reference to the accompanying drawing:

The first mode of allocating available RACH frames may be: using a 51 multiframe as a unit. Each 51 multiframe includes 51 TDMA frames, and available RACH resources in the 51 TDMA frames are allocated to the terminals. The allocation method in each 51 multiframe is the same.

For example, each 51 multiframe includes RACH resources of TDMA frame whose sequence numbers are 0-50. It is assumed that the network includes three classes of terminals whose class identifiers are Class1, Class2, and Class3, respectively. The range of TDMA frames of the RACH resources that Class1 is allowed to use is 0-30, that is, Class1 may use RACH resources of TDMA frame numbers 0-30. The range of TDMA frames of the RACH resources that Class2 is allowed to use is 31-49, that is, Class2 may use RACH resources of TDMA frame numbers 31-49. The range of TDMA frames of the RACH resources that Class3 is allowed to use is 15, 16, 25, 35, 45, and 50, that is, Class3 may use RACH resources of TDMA frame numbers 15, 16, 25, 35, 45, and 50. It should be noted that the available RACH resources may be a set of TDMA frames. This set may include continuous TDMA frames, or discrete TDMA frames, or both discrete TDMA frames and continuous TDMA frames.

The following uses another specific implementation as an example for describing allocation of available frames of RACH resources, but the specific method for allocating available frames of RACH resources according to the present invention is not limited thereto. All other methods for allocating available frames of RACH resources, which can be thought of by those skilled in the art according to the principles of the embodiments of the present invention, are covered in the protection scope of the present invention. FIG. 3 is a schematic diagram showing allocation of available frames of RACH resources. For example, RACH resources within the range of FNs 15 to 49 are allocated. It is assumed that the network includes at least three classes of terminals capable of accessing the network-side device, and that the class identifiers are ClassA, ClassB, and ClassC, respectively. Using 16 as a modulus, a modulo operation is performed on the FNs. The range of the modulo operation result of TDMA frames of the RACH resources that ClassA is allowed to use is 1-15, that is, terminals of ClassA may use "For ClassA" RACH resources shown in FIG. 3, and all the RACH resources satisfy the inequality: $1 \leq (FN \bmod 16) \leq 15$. Likewise, the range of the modulo operation result of TDMA frames of the RACH resources that ClassB is allowed to use is 0-0, that is, terminals of ClassB may use "For ClassB" RACH resources shown in FIG. 3, and all the RACH resources satisfy the inequality: $0 \leq (FN \bmod 16) \leq 0$. Likewise, the range of the modulo operation result of TDMA frames of the RACH resources that ClassC is allowed to use is X-Y, that is, all the RACH resources that terminals of ClassC may use satisfy the inequality: $X \leq (FN \bmod 16) \leq Y$. The table of RACH resource allocation may be but is not limited to Table 1:

**Table 1**

| Class Identifier | Start Value of Granted Frame Number MOD 16 (4 Bits) | End Value of Granted Frame Number MOD 16 (4 Bits) | Description |
|---|---|---|---|
| ClassA | 1 (0001) | 15 (1111) | All frames with a modulo operation result from 1 to 15 may be accessed by a terminal. |
| ClassB | 0(0000) | 0(0000) | Only the frame with a modulo operation result 0 may be accessed by a terminal. |
| ClassC | X | Y | $Y \geq X$, and all frames with a modulo operation result from X to Y may be accessed by a terminal. |

**EP 2 645 779 A1**

Step 202: A terminal receives the access control information sent by the network-side device, and obtains, from the mapping relationship between the class identifier of the terminal and the available frames of the RACH resources of the terminal according to its class identifier, available frames of RACH resources corresponding to its class identifier on a one-to-one basis.

Step 203: A channel request CR for accessing the network is sent through the available frames of RACH resources.

By using the network access method provided by the embodiment of the present invention, a terminal obtains, according to its class identifier, available frames of RACH resources corresponding to the class identifier on a one-to-one basis, and sends a CR through the available frames of RACH resources. Access RACH resources are allocated to the terminal according to the class identifier, effectively ensuring that various terminals can access the network. When a large number of terminals of a class allowed for access roam to a local network unexpectedly, no great impact is caused to local users due to control of the network-side device.

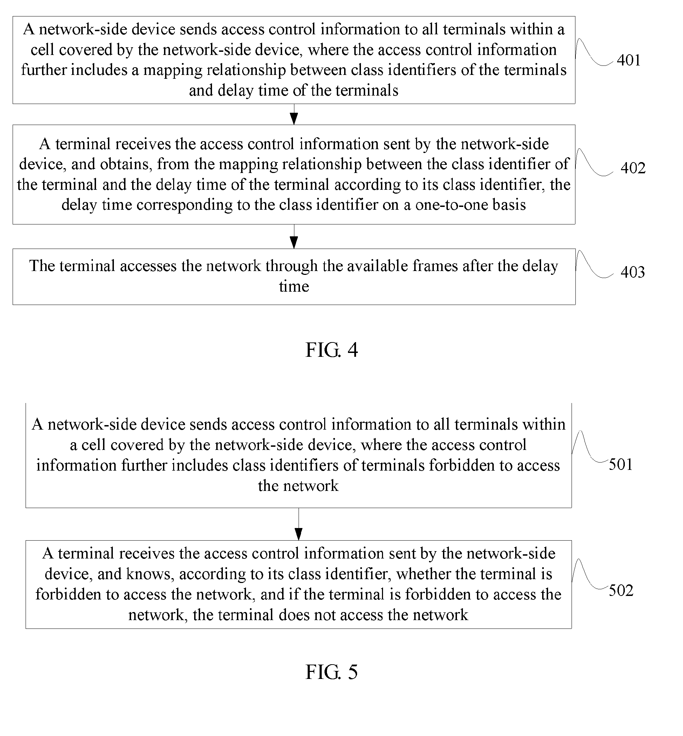

FIG. 4 is a flowchart of a network access method according to still another embodiment of the present invention. In this embodiment, the access control information sent by a network-side device to a terminal may include a mapping relationship between a class identifier of the terminal and delay time of the terminal in addition to a mapping relationship between the class identifier of the terminal and available frames of RACH resources of the terminal. As shown in FIG. 4, the method includes:

Step 401: A network-side device sends access control information to all terminals within a cell covered by the network-side device, where the access control information further includes a mapping relationship between class identifiers of the terminals and delay time of the terminals.

If the network-side device detects that the real-time condition of the network load does not allow all terminals to access the network, the network-side device delays access of a part of terminals by control. In this case, the network-side device sends the mapping relationship between the class identifiers of the terminals and the delay time of the terminals to the terminals. The network-side device may send the mapping relationship between the class identifiers of the terminals and the delay time of the terminals and the mapping relationship between the class identifiers of the terminals and the available RACH frames of the terminals simultaneously to the terminals through one message, or send the mapping relationships to the terminals through two messages, respectively, which is not limited herein.

The information may be expressed in the form of Table 2 but is not limited thereto:

**Table 2**

| Class Identifier | Start Value of Granted Frame Number MOD 16 (4 Bits) | End Value of Granted Frame Number MOD 16 (4 Bits) | Description |
|---|---|---|---|
| ClassE | 15 (1111) | 0(0000) to 14(1110) | Access of terminals of this class is delayed, and the delay time is as follows: |
| | 15 (1111) | 0(0000) | 8 seconds |
| | | 1 (0001) | 16 seconds |
| | | 2 (0010) | 24 seconds |
| | | 3 (0011) | 32 seconds |
| | | 4 (0100) | 45 seconds |
| | | 5 (0101) | 1 minute |
| | | 6 (0110) | 2 minutes |
| | | 7 (0111) | 3 minutes |
| | | 8 (1000) | 4 minutes |
| | | 9 (1001) | 5 minutes |
| | | 10 (1010) | 10 minutes |
| | | 11 (1011) | 15 minutes |
| | | 12 (1100) | 1 hour |
| | | 13 (1101) | 24 hours |
| | | 14 (1110) | Reserved |

Alternatively, "Start Value of Granted Frame Number MOD 16 (4 Bits) " and "End Value of Granted Frame Number MOD 16 (4 Bits) " in Table 2 may be not used, but a mapping relationship between the "class identifier" and the "delay time" is directly provided, which is not limited herein.

Step 402: A terminal receives the access control information sent by the network-side device, and obtains, from the mapping relationship between the class identifier of the terminal and the delay time of the terminal according to its class identifier, the delay time corresponding to the class identifier on a one-to-one basis.

Step 403: The terminal accesses the network through the available frames after the delay time.

By using the network access method provided by the embodiment of the present invention, a terminal obtains, according to its class identifier, access delay time corresponding to the class identifier on a one-to-one basis, and accesses the network through available frames after the access delay time, leaving the period of delayed access for other terminals to use RACH resources, so that other terminals can access the network. When a large number of terminals of a class allowed for access roam to a local network unexpectedly, the network-side device may delay access of the terminals by control to ensure that no great impact is caused to local users.

FIG. 5 is a flowchart of a network access method according to still another embodiment of the present invention. In this embodiment, the access control information sent by a network-side device to a terminal includes class identifiers of terminals forbidden to access a network. As shown in FIG. 5, the method includes:

Step 501: A network-side device sends access control information to all terminals within a cell covered by the network-side device, where the access control information further includes class identifiers of terminals forbidden to access the network.

If the network-side device detects that the real-time condition of the network load does not allow all terminals to access the network, the network-side device delays access of a part of terminals by control. In this case, the network-side device sends the class identifiers of the terminals forbidden to access the network to the terminals.

The information may be expressed in the form of Table 3 but is not limited thereto:

**Table 3**

| Class identifier | Start Value of Granted Frame Number MOD 16 (4 Bits) | End Value of Granted Frame Number MOD 16 (4 Bits) | Description |
|---|---|---|---|
| ClassD | 1 (0001) | 0(0000) | Terminals of this class are forbidden to access the network. |

Step 502: A terminal receives the access control information sent by the network-side device, and knows, according to its class identifier, whether the terminal is forbidden to access the network, and if the terminal is forbidden to access the network, the terminal does not access the network.

By using the network access method provided by the embodiment of the present invention, a terminal knows, according to its class identifier, whether the terminal is forbidden by a network-side device to access the network; if the terminal is forbidden by the network-side device to access the network, the terminal does not access the network, but reserves RACH resources for other terminals, so that other terminals can access the network. When a large number of terminals of a class allowed for access roam to a local network unexpectedly, the network-side device may forbid access of the terminals by control to ensure that no great impact is caused to local users.

From Table 1 to Table 3, it can be seen that the network-side device may allocate available frames in the RACH resources to different terminals, and may also forbid or delay network access of some terminals.

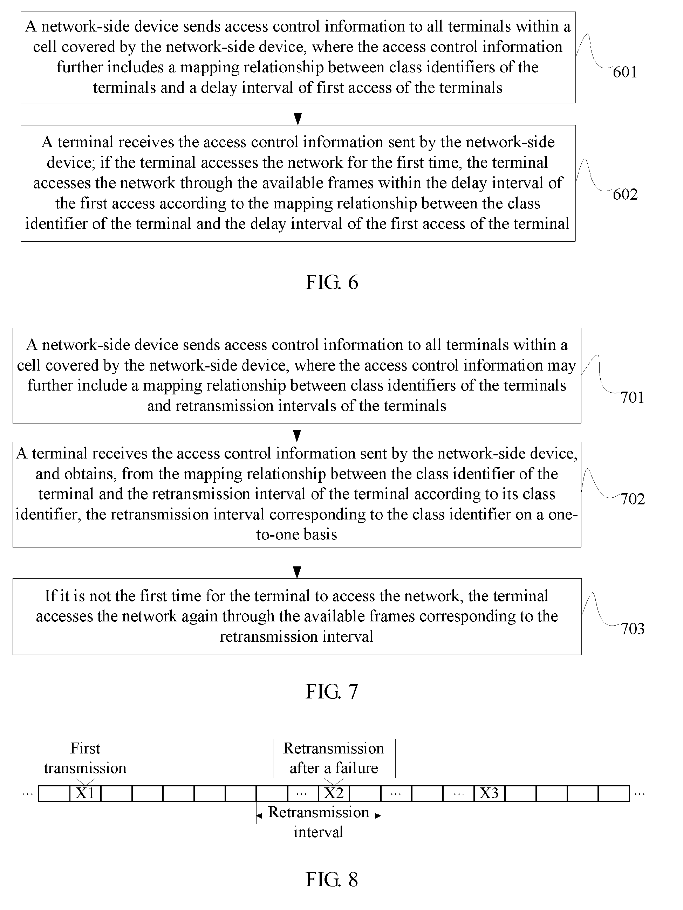

FIG. 6 is a flowchart of a network access method according to still another embodiment of the present invention. In this embodiment, the access control information sent by a network-side device to a terminal may further include a mapping relationship between a class identifier of the terminal and a delay interval of first access of the terminal in addition to a mapping relationship between the class identifier of the terminal and available frames of RACH resources of the terminal. As shown in FIG. 6, this method includes:

Step 601: A network-side device sends access control information to all terminals within a cell covered by the network-side device, where the access control information further includes a mapping relationship between class identifiers of the terminals and a delay interval of first access of the terminals.

The network-side device may send the mapping relationship between the class identifiers of the terminals and the delay interval of the first access of the terminals and the mapping relationship between the class identifiers and the available RACH frames of the terminals simultaneously to the terminals through one message, or send the mapping relationships to the terminals through two messages, respectively, which is not limited herein.

The network-side device may serve the terminals differently according to different class identifiers of the terminals. For example, for control of the first access, in view of the large number of such terminals and the possibility that

7

the terminals initiate access requests simultaneously, to prevent the terminals from initiating access requests simultaneously and therefore causing congestion on RACH resources, the terminals may be controlled to first wait for a period before the access and then send access requests, in order to reach the purposes of control, preventing congestion of the RACH channel, and improving the access success ratio of the terminals. In this embodiment, it is assumed that the delay interval of the first access is related to the number of such terminals. Therefore, the network-side device may directly deliver the number of such terminals, and the terminals calculate the delay interval of the first access; alternatively the delay interval of the first access is calculated according to the number of such terminals and then is sent to the terminals. The delivered information may be indicated by 4 bits, where the meaning of the 4 bits may be but is not limited to the expressions in Table 4:

**Table 4**

| Bit | Delay Interval of First Access | Number of Terminals |
| --- | --- | --- |
| 0000 | 94 | 10 |
| 0001 | 469 | 50 |
| 0010 | 938 | 100 |
| 0011 | 1875 | 200 |
| 0100 | 4688 | 500 |
| 0101 | 7500 | 800 |
| 0110 | 9375 | 1000 |
| 0111 | 18750 | 2000 |
| 1000 | 28125 | 3000 |
| 1001 | 46875 | 5000 |
| 1010 | 93750 | 10000 |
| 1011 | Reserved | Reserved |
| 1100 | Reserved | Reserved |
| 1101 | Reserved | Reserved |
| 1110 | Reserved | Reserved |
| 1111 | Reserved | Reserved |

The mapping relationship between the class identifiers of the terminals and the delay interval of the first access, sent by the network-side device, may be but is not limited to expressions in Table 5:

**Table 5**

| Class identifier | Bit |
| --- | --- |
| ClassA | 0000 |
| ClassB | 0001 |
| ClassC | 0010 |
| ClassD | 0011 |
| ClassE | 0100 |
| ClassF | 0101 |
| ClassG | 0110 |
| ClassH | 0111 |
| ClassI | 1000 |
| ClassJ | 1001 |

(continued)

| Class identifier | Bit |
|---|---|
| ClassK | 1010 |
| ClassL | 1011 |
| ClassM | 1100 |
| ClassN | 1101 |
| ClassO | 1110 |
| ClassP | 1111 |

Step 602: A terminal receives the access control information sent by the network-side device; if the terminal accesses the network for the first time, the terminal accesses the network through the available frames within the delay interval of the first access according to the mapping relationship between the class identifier of the terminal and the delay interval of the first access of the terminal.

It should be noted that if the delay interval table of the first access carries only all terminals in the cell covered by the network-side device, the corresponding delay interval of the first access may be calculated according to the following formula (1):

$$N\_DelaySlots \geq \frac{N\_Devices \times 6.25 \times 9}{N\_CCCHs \times N\_Agchs} \qquad (1)$$

In formula (1), $N\_DelaySlots$ is the delay interval of the first access, $N\_Devices$ is the number of terminals corresponding to various class identifiers, $N\_CCCHs$ is the number of CCCH channels configured for the cell, and $N\_Agchs$ represents the number of AGCH blocks (each block includes 4 TDMA frames) in each 51 multiframe.

FIG. 7 is a flowchart of a network access method according to still another embodiment of the present invention. In this embodiment, the access control information sent by a network-side device to a terminal may further include a mapping relationship between a class identifier of the terminal and a retransmission interval of the terminal in addition to a mapping relationship between the class identifier of the terminal and available frames of RACH resources of the terminal, which is used as an example for description. As shown in FIG. 7, this method includes:

Step 701: A network-side device sends access control information to all terminals within a cell covered by the network-side device, where the access control information may further include a mapping relationship between class identifiers of the terminals and retransmission intervals of the terminals.

The network-side device may send the mapping relationship between the class identifiers of the terminals and the retransmission intervals of the terminals and the mapping relationship between the class identifiers of the terminals and the available RACH frames of the terminals simultaneously to the terminals through one message, or send the mapping relationships to the terminals through two messages, respectively, which is not limited herein.

The retransmission interval may be indicated by 4 bits, as shown by the mapping relationship between the 4-bit identifier and the retransmission interval.

**Table 6**

| Bit | Value of retransmission interval T1 |
|---|---|
| 0000 | Each retransmission interval is calculated by using a specified formula. |
| 0001 | Same as above. |
| 0010 | Same as above. |
| 0011 | Same as above. |
| 0100 | Same as above. |
| 0101 | Same as above. |
| 0110 | Same as above. |
| 0111 | Same as above. |

(continued)

| Bit | Value of retransmission interval T1 |
|---|---|
| 1000 | Same as above. |
| 1001 | Same as above. |
| 1010 | Same as above. |
| 1011 | Reseved. |
| 1100 | Reseved. |
| 1101 | Reseved. |
| 1110 | Reseved. |
| 1111 | Reseved. |

The mapping relationship between the class identifier and the retransmission interval of a terminal may be as shown in Table 7:

**Table 7**

| Class identifier | Bit |
|---|---|
| ClassA | 0000 |
| ClassB | 0001 |
| ClassC | 0010 |
| ClassD | 0011 |
| ClassE | 0100 |
| ClassF | 0101 |
| ClassG | 0110 |
| ClassH | 0111 |
| ClassI | 1000 |
| ClassJ | 1001 |
| ClassK | 1010 |

Step 702: A terminal receives the access control information sent by the network-side device, and obtains, from the mapping relationship between the class identifier of the terminal and the retransmission interval of the terminal according to its class identifier, the retransmission interval corresponding to the class identifier on a one-to-one basis.

Step 703: If it is not the first time for the terminal to access the network, the terminal accesses the network again through the available frames corresponding to the retransmission interval.

It should be noted that if the terminal receives no acknowledgment ACK (immediate allocation or allocation reject) from the network side after sending a CR, the terminal resends the CR through the RACH, where the time interval between the two CR transmissions is {S, S+1, ..., S+T-1}.

It should be noted that if the retransmission interval table carries only the number of all terminals within the cell covered by the network-side device, the corresponding retransmission interval may be calculated according to the following formulas (2) and (3):

$$N_k = N_{k-1}(1-P_{k-1}) = N_1(1-P_1)(1-P_2)...(1-P_{k-1}) = N_1(1-\frac{1}{e})^{k-1} \qquad (2)$$

$$T_k = Max(N_k, 2S) = Max(N_1(1-\frac{1}{e})^{k-1}, 2S), \quad k \in N^+ \tag{3}$$

In the above formulas, $T_k$ is the length of the time period of the $k^{th}$ retransmission by the terminal; $N_k$ is the number of users who initiate access within the time period $T_k$; S is a parameter, and its value is obtained according to other parameters delivered in system information SI; 2S is twice the value of S; and $P_k$ is the access success ratio of the $k^{th}$ retransmission.

The terminal accesses the network again according to the retransmission interval carried in the access control information. The terminal may access the network randomly by using RACH resources provided in the prior art.

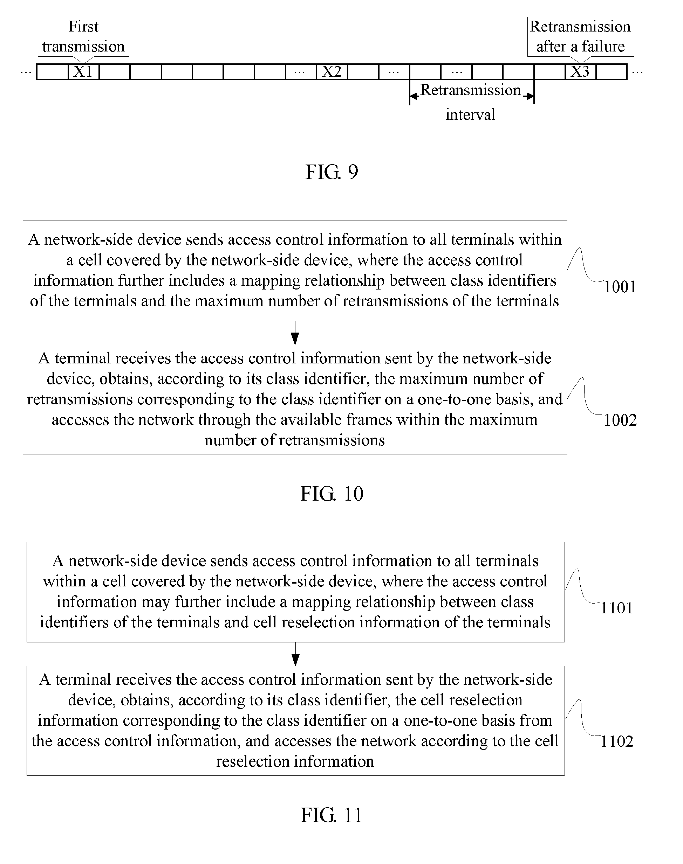

For the above embodiment, it should be further explained that once the available frames of RACH resources used for the terminal to access the network are determined, the determined available frames of RACH resources are selected, regardless of a first CR transmission or a CR retransmission. For ease of description, assuming that the determined available frames of RACH resources for access are a set P and that the CR retransmission interval of the terminal is Q, if the intersection between the retransmission interval set Q of the terminal and the set P of the available frames of the granted RACH resources is not empty, the retransmission interval selected by the terminal should be the intersection of P and Q. FIG. 8 is a schematic diagram showing a retransmission interval and granted RACH resources with an intersection, where timeslot X2 is an intersection of P and Q, and therefore, the terminal selects X2 as the timeslot for a CR retransmission. If the intersection between the retransmission interval set Q of the terminal and the set P of the available frames of the granted RACH resources is empty, the terminal selects the available frames of the granted RACH resources after the retransmission interval. FIG. 9 is a schematic diagram showing a retransmission interval and the available frames of the granted RACH resources without an intersection, where the terminal retransmits the CR by selecting the available frames of the granted RACH resources nearest after the retransmission interval, that is, selecting timeslot X3 as the timeslot for a CR retransmission. The retransmission interval Q may be either the retransmission interval in the prior art, or the received retransmission interval corresponding to the class identifier of the terminal.

FIG. 10 is a flowchart of a network access method according to still another embodiment of the present invention. In this embodiment, the access control information sent by a network-side device to a terminal may include a mapping relationship between a class identifier of the terminal and the maximum number of retransmissions of the terminal in addition to a mapping relationship between the class identifier and available frames of RACH resources of the terminal. As shown in FIG. 10, the method includes:

Step 1001: A network-side device sends access control information to all terminals within a cell covered by the network-side device, where the access control information further includes a mapping relationship between class identifiers of the terminals and the maximum number of retransmissions of the terminals.

The network-side device may send the mapping relationship between the class identifiers of the terminals and the maximum number of retransmissions of the terminals and the mapping relationship between the class identifiers of the terminals and the available RACH frames of the terminals simultaneously to the terminals through one message, or send the mapping relationships to the terminals through two messages, respectively, which is not limited herein.

The maximum number of retransmissions may be indicated by 3 bits, and the maximum number of retransmissions indicated by the 3 bits may be but is not limited to the expressions in Table 8:

**Table 8**

| Bit3 | Bit2 | Bit1 | Description |
|------|------|------|-------------|
| 0 | 0 | 0 | The maximum number of retransmissions is 0. |
| 0 | 0 | 1 | The maximum number of retransmissions is 1. |
| 0 | 1 | 0 | The maximum number of retransmissions is 2. |
| 0 | 1 | 1 | The maximum number of retransmissions is 3. |
| 1 | 0 | 0 | The maximum number of retransmissions is 4. |
| 1 | 0 | 1 | The maximum number of retransmissions is 5. |
| 1 | 1 | 0 | The maximum number of retransmissions is 6. |
| 1 | 1 | 1 | The maximum number of retransmissions is 7. |

The mapping relationship between the class identifiers of the terminals and the maximum number of retransmissions may be but is not limited to the contents of Table 9:

**Table 9**

| Class identifier | Bit | | |
|---|---|---|---|
| ClassA | 0 | 0 | 0 |
| ClassB | 0 | 0 | 1 |
| ClassC | 0 | 1 | 0 |
| ClassD | 0 | 1 | 1 |
| ClassE | 1 | 0 | 0 |
| ClassF | 1 | 0 | 1 |
| ClassG | 1 | 1 | 0 |
| ClassH | 1 | 1 | 1 |

Step 1002: A terminal receives the access control information sent by the network-side device, obtains, according to its class identifier, the maximum number of retransmissions corresponding to the class identifier on a one-to-one basis, and accesses the network through the available frames within the maximum number of retransmissions.

FIG. 11 is a flowchart of a network access method according to still another embodiment of the present invention. In this embodiment, the access control information sent by a network-side device to a terminal may include a mapping relationship between a class identifier of the terminal and cell reselection information of the terminal in addition to a mapping relationship between the class identifier of the terminal and available frames of RACH resources of the terminal. As shown in FIG. 11, the method includes:

Step 1101: A network-side device sends access control information to all terminals within a cell covered by the network-side device, where the access control information may further include a mapping relationship between class identifiers of the terminals and cell reselection information of the terminals.

The network-side device may send the mapping relationship between the class identifiers of the terminals and the cell reselection information of the terminals and the mapping relationship between the class identifiers of the terminals and the available RACH frames of the terminals simultaneously to the terminals through one message, or send the mapping relationships to the terminals through two messages, respectively, which is not limited herein.

It should be noted that terminals of a class perform autonomous cell reselection after an access failure. If terminals of a class are numerous and may possibly initiate access simultaneously, the following risk may exist: All the terminals fail to access cell A and reselect cell B, which causes an access impact to cell B. Therefore, the network-side device controls whether to allow various terminals to reselect cells after access failures, and 1 bit may be used for defining whether to allow cell reselection, as shown in Table 10:

**Table 10**

| Bit1 | Description |
|---|---|
| 0 | Cell reselection is not allowed after an access failure. |
| 1 | Cell reselection is allowed after an access failure. |

The mapping relationship between the class identifiers of the terminals and the cell reselection information may be but is not limited to the expressions in Table 11:

**Table 11**

| Class identifier | Bit |
|---|---|
| ClassA | 1 |
| ClassB | 0 |
| ClassC | 0 |
| ClassD | 1 |
| ClassE | 1 |

(continued)

| Class identifier | Bit |
|---|---|
| ClassF | 1 |
| ClassG | 1 |
| ClassH | 0 |

Step 1102: A terminal receives the access control information sent by the network-side device, obtains, according to its class identifier, the cell reselection information corresponding to the class identifier on a one-to-one basis from the access control information, and accesses the network according to the cell reselection information.

If the cell reselection information indicates that cell reselection is not allowed after an access failure, the terminal does not reselect a cell.

If the cell reselection information indicates that cell reselection is allowed after an access failure, the terminal reselects a cell through the allocated available frames.

For all the above embodiments, it should be noted that the network-side device may send the control information to all the terminals through an air interface message. The air interface message may be system information SI, a paging message Paging, or cell broadcast CB.

It should also be noted that the above access control information may be delivered separately, or multiple types of different access control information may be delivered simultaneously. This embodiment does not limit the types and quantities of the information to be delivered.

By using the network access method provided by the embodiment of the present invention, terminals are divided into different classes indicated by different class identifiers, and different access control is performed on the terminals according to different class identifiers of the terminals, for example, allocating different access resources, different access delay time, different retransmission intervals, different numbers of retransmissions, different cell reselection control, and so on, so that various terminals can access the network. When a large number of terminals of a class allowed for access roam to a local network unexpectedly, no great impact is caused to local terminals.

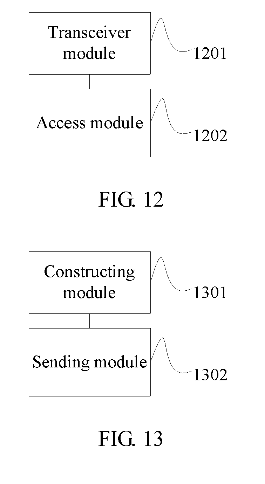

FIG. 12 is a schematic structural diagram of a terminal according to an embodiment of the present invention. As shown in FIG. 12, the terminal includes: a transceiver module 1201 and an access module 1202. The transceiver module 1201 is configured to receive access control information sent by a network-side device, where the access control information includes information of available frames allocated to the terminal according to a class identifier of the terminal on an RACH; and the access module 1202 is configured to access a network through the allocated available frames according to the access control information received by the transceiver module 1201.

In an embodiment, the access control information received by the transceiver module 1201 further includes: a mapping relationship between the class identifier of the terminal and delay time of the terminal; the access module 1202 is configured to access the network through the available frames after the corresponding delay time.

In another embodiment, the access control information received by the transceiver module 1201 further includes: a mapping relationship between the class identifier of the terminal and a delay interval of first access of the terminal; the access module 1202 is configured to access the network through the available frames within the corresponding delay interval of the first access if the access is the first access.

In still another embodiment, the access control information received by the transceiver module 1201 further includes: a mapping relationship between the class identifier of the terminal and a retransmission interval of the terminal; the access module 1202 is configured to access the network again through the available frames corresponding to the retransmission interval if the access is not the first access.

The access module includes a first unit or a second unit. The first unit is configured to access the network again through the available frames in the intersection if there is an intersection between frames in the retransmission interval and the available frames; the second unit is configured to access the network again through the available frames nearest after the retransmission interval if there is no intersection between frames in the retransmission interval and the available frames.

Further, the access module 1202 may be further configured to: access the network again according to a predetermined retransmission interval after the network access performed through the allocated available frames according to the access control information fails; access the network again through the available frames in the intersection if there is an intersection between frames in the retransmission interval and the available frames; and access the network again through the available frames nearest after the retransmission interval if there is no intersection between frames in the retransmission interval and the available frames.

In still another embodiment, the access control information received by the transceiver module 1201 further includes: a mapping relationship between the class identifier of the terminal and the maximum number of retransmissions of the terminal; the access module 1202 is configured to access the network through the available frames within the maximum number of retransmissions.

In still another embodiment, the access control information received by the transceiver module 1201 further includes: a mapping relationship between the class identifier of the terminal and cell reselection information of the terminal; the access module 1202 is configured to access the network through the allocated available frames if the cell reselection information corresponding to the class identifier of the terminal indicates that cell reselection is allowed.

With the terminal provided by the embodiment of the present invention, terminals are divided into different classes indicated by different class identifiers, and different access control is performed on the terminals according to different class identifiers of the terminals, for example, allocating different access resources, different access delay time, different retransmission intervals, different numbers of retransmissions, different cell reselection control, and so on, so that various terminals can access the network. When a large number of terminals of a class allowed for access roam to a local network unexpectedly, no great impact is caused to local terminals.

FIG. 13 is a schematic structural diagram of a network-side device according to an embodiment of the present invention. As shown in FIG. 13, the network-side device includes: a constructing module 1301 and a sending module 1302. The constructing module 1301 is configured to construct a message including access control information, where the access control information includes information of available frames allocated to a terminal according to a class identifier of the terminal in a random access channel RACH; the sending module 1302 is configured to send the message including the access control information to the terminal, so that the terminal accesses a network through the allocated available frames according to the access control information.

The allocated available frames include continuous TDMA frames and/or discrete TDMA frames on the RACH channel.

Further, the access control information sent by the sending module 1302 further includes one or more of the following:

a mapping relationship between the class identifier of the terminal and delay time of the terminal, so that the terminal accesses the network through the available frames after the corresponding delay time;

a mapping relationship between the class identifier of the terminal and a delay interval of first access of the terminal, so that the terminal accesses the network through the available frames within the corresponding delay interval of the first access when accessing the network for the first time;

a mapping relationship between the class identifier of the terminal and a retransmission interval of the terminal, so that the terminal accesses the network again through the available frames corresponding to the retransmission interval when accessing the network again;

a mapping relationship between the class identifier of the terminal and the maximum number of retransmissions of the terminal, so that the terminal accesses the network through the allocated available frames within the maximum number of retransmissions; and

a mapping relationship between the class identifier of the terminal and cell reselection information of the terminal, so that the terminal accesses the network through the allocated available frames when the cell reselection information corresponding to the class identifier of the terminal indicates that cell reselection is allowed.

With the network-side device provided by the embodiment of the present invention, terminals are divided into different classes indicated by different class identifiers, and different access control is performed on the terminals according to different class identifiers of the terminals, for example, allocating different access resources, different access delay time, different retransmission intervals, different numbers of retransmissions, different cell reselection control, and so on, so that various terminals can access the network. When a large number of terminals of a class allowed for access roam to a local network unexpectedly, no great impact is caused to local terminals.

Persons of ordinary skill in the art may understand that all or a part of the steps in the method according to the embodiments can be implemented by hardware under the instruction of a program. The program may be stored in a computer readable storage medium and when the program runs, the steps in the method according to the embodiments are executed. The storage medium is any medium that can store program codes, such as a ROM, a RAM, a magnetic disk, or a CD-ROM.

The apparatuses are described through exemplary embodiments. The units described as separated parts may be physically separated or physically not separated. The parts illustrated as units may or may not be physical units. That is, such parts may be located in one location or distributed in at least two network elements. A part or all of the modules may be selected according to actual needs to achieve the objectives of the solutions of the embodiments. Persons of ordinary skill in the art can understand and implement the technical solutions of the present invention without any creative effort.

Finally, it should be noted that the above embodiments are merely intended for describing the technical solutions of the present invention other than limiting the present invention. Although the present invention is described in detail with reference to the foregoing embodiments, persons of ordinary skill in the art should understand that they can still make modifications to the technical solutions described in the foregoing embodiments or make equivalent substitutions to some technical features thereof, without departing from the scope of the technical solutions of the embodiments of the present invention.

## Claims

1. A network access method, comprising:

   receiving, by a terminal, access control information sent by a network-side device, wherein the access control information comprises information of an available frame allocated to the terminal according to a class identifier of the terminal on a random access channel RACH; and
   accessing, by the terminal, a network through the allocated available frame according to the access control information.

2. The network access method according to claim 1, wherein the allocated available frame comprises continuous time division multiple access TDMA frames and/or discrete TDMA frames on the RACH channel.

3. The network access method according to claim 1 or 2, wherein: the access control information further comprises a mapping relationship between the class identifier of the terminal and delay time of the terminal; and
   the accessing, by the terminal, a network through the allocated available frame according to the access control information comprises:

   accessing the network through the available frame after the delay time.

4. The network access method according to claim 1 or 2, wherein: the access control information further comprises a mapping relationship between the class identifier of the terminal and a delay interval of first-time access of the terminal; and
   the accessing, by the terminal, a network through the allocated available frame according to the access control information comprises:

   accessing the network through the available frame within the delay interval of the first-time access if the access is first-time network access.

5. The network access method according to claim 1 or 2, wherein: the access control information further comprises a mapping relationship between the class identifier of the terminal and a retransmission interval of the terminal; and
   the accessing, by the terminal, a network through the allocated available frame according to the access control information comprises:

   accessing the network again through the available frame corresponding to the retransmission interval if the access is not first-time access.

6. The network access method according to claim 5, wherein the accessing the network again through the available frame corresponding to the retransmission interval comprises:

   if there is an intersection between frames in the retransmission interval and the available frame, accessing the network again through the available frame in the intersection; or
   if there is no intersection between frames in the retransmission interval and the available frame, accessing the network again through the available frame nearest after the retransmission interval.

7. The network access method according to claim 1 or 2, wherein: after the accessing a network through the allocated available frame according to the access control information fails, the method further comprises:

   accessing the network again according to a predetermined retransmission interval; and
   if there is an intersection between frames in the retransmission interval and the available frame, accessing the network again through the available frame in the intersection; or
   if there is no intersection between frames in the retransmission interval and the available frame, accessing the network again through an available frame nearest after the retransmission interval.

8. The network access method according to claim 1 or 2, wherein: the access control information further comprises a mapping relationship between the class identifier of the terminal and a maximum number of retransmissions of the terminal; and
the accessing, by the terminal, a network through the allocated available frame according to the access control information comprises:

accessing the network through the allocated available frame within the maximum number of retransmissions.

9. The network access method according to claim 1 or 2, wherein the access control information further comprises a mapping relationship between the class identifier of the terminal and cell reselection information of the terminal; and
the accessing, by the terminal, a network through the allocated available frame according to the access control information comprises:

accessing the network through the allocated available frame if the cell reselection information corresponding to the class identifier of the terminal indicates that cell reselection is allowed.

10. A network access method, comprising:

constructing, by a network-side device, a message comprising access control information, wherein the access control information comprises information of an available frame allocated to a terminal according to a class identifier of the terminal on a random access channel RACH; and
sending the message comprising the access control information to the terminal, so that the terminal accesses a network through the allocated available frame according to the access control information.

11. The network access method according to claim 10, wherein the allocated available frame comprises continuous time division multiple access TDMA frames and/or discrete TDMA frames on the RACH channel.

12. The network access method according to claim 10 or 11, wherein:

the access control information further comprises: a mapping relationship between the class identifier of the terminal and delay time of the terminal, so that the terminal accesses the network through the available frame after the delay time;
and/or
the access control information further comprises: a mapping relationship between the class identifier of the terminal and a delay interval of first-time access of the terminal, so that the terminal accesses the network through the corresponding available frame within the delay interval of the first-time access when the terminal accesses the network for the first time;
and/or
the access control information further comprises: a mapping relationship between the class identifier of the terminal and a retransmission interval of the terminal, so that the terminal accesses the network again through the available frame corresponding to the retransmission interval when accessing the network again;
and/or
the access control information further comprises: a mapping relationship between the class identifier of the terminal and a maximum number of retransmissions of the terminal, so that the terminal accesses the network through the allocated available frame within the maximum number of retransmissions;
and/or
the access control information further comprises: a mapping relationship between the class identifier of the terminal and cell reselection information of the terminal, so that the terminal accesses the network through the allocated available frame if the cell reselection information corresponding to the class identifier of the terminal indicates that cell reselection is allowed.

13. A terminal, comprising:

a transceiver module, configured to receive access control information sent by a network-side device, wherein the access control information comprises information of an available frame allocated to the terminal according to a class identifier of the terminal on a random access channel RACH; and

an access module, configured to access a network through the allocated available frame according to the access control information received by the transceiver module.

14. The terminal according to claim 13, wherein: the access control information received by the transceiver module further comprises a mapping relationship between the class identifier of the terminal and delay time of the terminal; and the access module is configured to access the network through the available frame after the corresponding delay time.

15. The terminal according to claim 13, wherein: the access control information received by the transceiver module further comprises a mapping relationship between the class identifier of the terminal and a delay interval of first-time access of the terminal; and
the access module is configured to access the network through the available frame within the delay interval of the first-time access if the access is the first-time access.

16. The terminal according to claim 13, wherein: the access control information received by the transceiver module further comprises a mapping relationship between the class identifier of the terminal and a retransmission interval of the terminal; and
the access module is configured to access the network again through the available frame corresponding to the retransmission interval if the access is not the first-time access.

17. The terminal according to claim 16, wherein the access module comprises:

a first unit, configured to: if there is an intersection between frames in the retransmission interval and the available frame, access the network again through the available frame in the intersection;
or a second unit, configured to: if there is no intersection between frames in the retransmission interval and the available frame, access the network again through the available frame nearest after the retransmission interval.

18. The terminal according to claim 13, wherein the access module is further configured to: access the network again according to a predetermined retransmission interval after accessing the network through the allocated available frame according to the access control information fails; and
if there is an intersection between frames in the retransmission interval and the available frame, access the network again through the available frame in the intersection; or
if there is no intersection between frames in the retransmission interval and the available frame, access the network again through the available frame nearest after the retransmission interval.

19. The terminal according to claim 13, wherein: the access control information received by the transceiver module further comprises a mapping relationship between the class identifier of the terminal and a maximum number of retransmissions of the terminal; and
the access module is configured to access the network through the allocated available frame within the maximum number of retransmissions.

20. The terminal according to claim 13, wherein: the access control information received by the transceiver module further comprises a mapping relationship between the class identifier of the terminal and cell reselection information of the terminal; and
the access module is configured to access the network through the allocated available frame if the cell reselection information corresponding to the class identifier of the terminal indicates that cell reselection is allowed.

21. A network-side device, comprising:

a constructing module, configured to construct a message comprising access control information, wherein the access control information comprises information of an available frame allocated to a terminal according to a class identifier of the terminal on a random access channel RACH; and
a sending module, configured to send the message comprising the access control information to the terminal, so that the terminal accesses a network through the allocated available frame according to the access control information.

22. The network-side device according to claim 21, wherein the allocated available frame comprises continuous time division multiple access TDMA frames and/or discrete TDMA frames on the RACH channel.

**23.** The network-side device according to claim 21 or 22, wherein the access control information sent by the sending module further comprises one or more of the following:

a mapping relationship between the class identifier of the terminal and delay time of the terminal, so that the terminal accesses the network through the available frame after the delay time;

a mapping relationship between the class identifier of the terminal and a delay interval of first-time access of the terminal, so that the terminal accesses the network through the corresponding available frame within the delay interval of the first-time access when accessing the network for the first time;

a mapping relationship between the class identifier of the terminal and a retransmission interval of the terminal, so that the terminal accesses the network again through the available frame corresponding to the retransmission interval when accessing the network again;

a mapping relationship between the class identifier of the terminal and a maximum number of retransmissions of the terminal, so that the terminal accesses the network through the allocated available frame within the maximum number of retransmissions; and

a mapping relationship between the class identifier of the terminal and cell reselection information of the terminal, so that the terminal accesses the network through the allocated available frame when the cell reselection information corresponding to the class identifier of the terminal indicates that cell reselection is allowed.

A terminal receives access control information sent by a network-side device, where the access control information includes information of available frames allocated to the terminal according to a class identifier of the terminal in an RACH

101

The terminal accesses a network through the allocated available frames according to the access control information

102

FIG. 1

A network-side device sends access control information to all terminals within a cell covered by the network-side device, where the access control information includes a mapping relationship between class identifiers of the terminals and the available RACH frames of the terminals

201

A terminal receives the access control information sent by the network-side device, and obtains, from the mapping relationship between the class identifier of the terminal and the available frames of the RACH resources of the terminal according to its class identifier, available frames of RACH resources corresponding to its class identifier on a one-to-one basis

202

A channel request CR for accessing the network is sent through the available frames of RACH resources

203

FIG. 2

For Class A          For Class A

··· | 15 | 16 | 17 | 18 | 19 | ... | 29 | 30 | 31 | 32 | 33 | 34 | 35 | ... | 45 | 46 | 47 | 48 | 49 | ···

For Class B          For Class B          For Class B

FIG. 3

A network-side device sends access control information to all terminals within a cell covered by the network-side device, where the access control information further includes a mapping relationship between class identifiers of the terminals and delay time of the terminals ⎯ 401

A terminal receives the access control information sent by the network-side device, and obtains, from the mapping relationship between the class identifier of the terminal and the delay time of the terminal according to its class identifier, the delay time corresponding to the class identifier on a one-to-one basis ⎯ 402

The terminal accesses the network through the available frames after the delay time ⎯ 403

FIG. 4

A network-side device sends access control information to all terminals within a cell covered by the network-side device, where the access control information further includes class identifiers of terminals forbidden to access the network ⎯ 501

A terminal receives the access control information sent by the network-side device, and knows, according to its class identifier, whether the terminal is forbidden to access the network, and if the terminal is forbidden to access the network, the terminal does not access the network ⎯ 502

FIG. 5

A network-side device sends access control information to all terminals within a cell covered by the network-side device, where the access control information further includes a mapping relationship between class identifiers of the terminals and a delay interval of first access of the terminals ⌐601

A terminal receives the access control information sent by the network-side device; if the terminal accesses the network for the first time, the terminal accesses the network through the available frames within the delay interval of the first access according to the mapping relationship between the class identifier of the terminal and the delay interval of the first access of the terminal ⌐602

FIG. 6

A network-side device sends access control information to all terminals within a cell covered by the network-side device, where the access control information may further include a mapping relationship between class identifiers of the terminals and retransmission intervals of the terminals ⌐701

A terminal receives the access control information sent by the network-side device, and obtains, from the mapping relationship between the class identifier of the terminal and the retransmission interval of the terminal according to its class identifier, the retransmission interval corresponding to the class identifier on a one-to-one basis ⌐702

If it is not the first time for the terminal to access the network, the terminal accesses the network again through the available frames corresponding to the retransmission interval ⌐703

FIG. 7

| First transmission | | Retransmission after a failure |
|---|---|---|

··· | X1 | | | | | | ··· | X2 | | ··· | | ··· | X3 | | | | | ···

|◄ Retransmission ►|
interval

FIG. 8

| First transmission | | | | | | | | | | | | | | Retransmission after a failure |

··· | | X1 | | | | | | ··· | X2 | | ··· | | ··· | | | | X3 | | ···

|←Retransmission→|
interval

## FIG. 9

| A network-side device sends access control information to all terminals within a cell covered by the network-side device, where the access control information further includes a mapping relationship between class identifiers of the terminals and the maximum number of retransmissions of the terminals | 1001 |

↓

| A terminal receives the access control information sent by the network-side device, obtains, according to its class identifier, the maximum number of retransmissions corresponding to the class identifier on a one-to-one basis, and accesses the network through the available frames within the maximum number of retransmissions | 1002 |

## FIG. 10

| A network-side device sends access control information to all terminals within a cell covered by the network-side device, where the access control information may further include a mapping relationship between class identifiers of the terminals and cell reselection information of the terminals | 1101 |

↓

| A terminal receives the access control information sent by the network-side device, obtains, according to its class identifier, the cell reselection information corresponding to the class identifier on a one-to-one basis from the access control information, and accesses the network according to the cell reselection information | 1102 |

## FIG. 11

Transceiver
module                1201

Access module         1202

FIG. 12

Constructing
module                1301

Sending module        1302

FIG. 13

<table>
<tr><td colspan="2"><h1 style="text-align:center">INTERNATIONAL SEARCH REPORT</h1></td><td>International application No.<br><br>**PCT/CN2011/084788**</td></tr>
</table>

| A. CLASSIFICATION OF SUBJECT MATTER |
|---|
| See the extra sheet<br>According to International Patent Classification (IPC) or to both national classification and IPC |

| B. FIELDS SEARCHED |
|---|
| Minimum documentation searched (classification system followed by classification symbols)<br><br>IPC: H04W; H04Q; H04L; H04B |
| Documentation searched other than minimum documentation to the extent that such documents are included in the fields searched |
| Electronic data base consulted during the international search (name of data base and, where practicable, search terms used)<br><br>IEEE, CNKI, GOOGLE, CNPAT, CNTXT, WPI, EPODOC: network side, Internet of things, M2M, H2H, network, access, random, channel, RACH, BS, base station, control, allot, assign, frame, time slot, type, collision, collide, IOT |

| C. DOCUMENTS CONSIDERED TO BE RELEVANT | | |
|---|---|---|
| Category* | Citation of document, with indication, where appropriate, of the relevant passages | Relevant to claim No. |
| X | CN 101111073 A (BEIJING UNIVERSITY OF AERONAUTICS AND ASTRONAUTICS), 23 January 2008 (23.01.2008), see description, page 2, paragraph 2, and page 5, $2^{nd}$ paragraph from bottom to page 8, paragraph 3, and figures 1-10 | 1-23 |
| A | CN 101505522 A (HUAWEI TECHNOLOGIES CO., LTD.), 12 August 2009 (12.08.2009), see the whole document | 1-23 |
| A | CN 101483828 A (DATANG MOBILE COMMUNICATIONS EQUIPMENT CO., LTD.), 15 July 2009 (15.07.2009), see the whole document | 1-23 |
| A | US 2007/0275746 A1 (BITRAN, Y.), 29 November 2007 (29.11.2007), see the whole document | 1-23 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br><br>15 March 2012 (15.03.2012) | Date of mailing of the international search report<br><br>**29 March 2012 (29.03.2012)** |
|---|---|
| Name and mailing address of the ISA/CN:<br> State Intellectual Property Office of the P. R. China<br> No. 6, Xitucheng Road, Jimenqiao<br> Haidian District, Beijing 100088, China<br>Facsimile No.: (86-10) 62019451 | Authorized officer<br><br>**XING, Yunfeng**<br><br>Telephone No.: (86-10) **62413541** |

Form PCT/ISA/210 (second sheet) (July 2009)

# INTERNATIONAL SEARCH REPORT
Information on patent family members

| International application No. |
|---|
| **PCT/CN2011/084788** |

| Patent Documents referred in the Report | Publication Date | Patent Family | Publication Date |
|---|---|---|---|
| CN 101111073 A | 23.01.2008 | None | |
| CN 101505522 A | 12.08.2009 | None | |
| CN 101483828 A | 15.07.2009 | None | |
| US 2007/0275746 A1 | 29.11.2007 | WO 2008/078311 A2 | 03.07.2008 |
| | | JP 2010522448 A | 01.07.2010 |
| | | INKOLNP 200902227 E | 03.07.2009 |

Form PCT/ISA/210 (patent family annex) (July 2009)

# INTERNATIONAL SEARCH REPORT

International application No.

**PCT/CN2011/084788**

**CLASSIFICATION OF SUBJECT MATTER**

H04W 48/08 (2009.01) i

H04W 74/08 (2009.01) i

Form PCT/ISA/210 (extra sheet) (July 2009)

**REFERENCES CITED IN THE DESCRIPTION**

**Patent documents cited in the description**

- CN 201010623123